(19) Europäisches Patentamt
European Patent Office
Office européen des brevets

(11) **EP 2 655 505 B1**

(12) **EUROPEAN PATENT SPECIFICATION**

(45) Date of publication and mention
of the grant of the patent:
**25.07.2018 Bulletin 2018/30**

(21) Application number: **11850673.2**

(22) Date of filing: **16.12.2011**

(51) Int Cl.:
***C08L 23/12*** *(2006.01)*

(86) International application number:
**PCT/US2011/065555**

(87) International publication number:
**WO 2012/087832 (28.06.2012 Gazette 2012/26)**

(54) **PROPYLENE-BASED COMPOSITIONS OF ENHANCED APPEARANCE AND EXCELLENT MOLD FLOWABILITY**

PROPYLENBASIERTE ZUSAMMENSETZUNGEN MIT ERWEITERTEM ERSCHEINUNGSBILD UND HERVORRAGENDER FLIESSFÄHIGKEIT

COMPOSITIONS À BASE DE PROPYLÈNE D'ASPECT AMÉLIORÉ ET D'EXCELLENTE APTITUDE À L'ÉCOULEMENT DANS UN MOULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.12.2010 US 201061424762 P**

(43) Date of publication of application:
**30.10.2013 Bulletin 2013/44**

(73) Proprietor: **Braskem America, Inc.**
**Philadelphia, PA 19103 (US)**

(72) Inventors:
 • **DOUFAS, Antonios, K.**
 **Baytown, TX 77521 (US)**

 • **CATALINA, Edward**
 **Greensburgh**
 **PA 15601 (US)**
 • **THURSTON, William, C.**
 **Pittsburgh**
 **PA 15235 (US)**
 • **MAJEWSKI, Rita**
 **Pittsburgh, PA 15236 (US)**

(74) Representative: **Strehl Schübel-Hopf & Partner**
 **Maximilianstrasse 54**
 **80538 München (DE)**

(56) References cited:
 **EP-A1- 0 911 365      WO-A1-2009/068577**
 **US-A1- 2004 044 107   US-A1- 2007 010 616**
 **US-A1- 2010 152 360   US-A1- 2010 152 382**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The present invention relates to a propylene-based composition of excellent surface appearance manifested by combined enhancement of tiger (flow) marking performance and low gels count, as well as excellent mold flowability and stiffness-impact balance, a process of making the same and an article made of the composition.

BACKGROUND OF THE INVENTION

In order to achieve enhanced tiger marking performance of impact copolymer polypropylene (ICP) compositions with respect to injection molding of a large/long part typically used for automotive applications (as described below), introduction of a very high molecular weight (MW) (or equivalently high intrinsic viscosity (I.V.) rubber phase, e.g., ethylene-propylene (EPR) copolymer or a copolymer of propylene with other alpha-olefins) is often required, which results in a high viscosity ratio between the rubber phase and the matrix (e.g., propylene-based polymer such as homopolymer polypropylene (HPP)), causing a high count of large polymeric gels that are detrimental to surface appearance and final part paintability. The use of specialized filter media (e.g., media of very low porosity) can reduce the number of large gels to some degree; however, their presence can be still detrimental to the surface appearance of the molded parts. In addition, the use of specialized filter media for break-up of large gels can have negative implications on extruder die pressures, that in turn could limit production rates as well as contribute to increased manufacturing costs.

Snyder (1999) [Snyder, A., "A Unique High Stiffness, High Melt Flow Impact PP Copolymer From a Solvent/Slurry Process, 9th International Business Forum on Specialty Polyolefins, Scotland (SPO 99) Conference, October 12-13, 1999, Houston, Texas] describes a slurry/solvent process pertinent to the production of particular propylene based products. Bimodal operation between the R1 and R2 HPP reactors of the solvent/slurry process was discussed. The average weight molecular weight (Mw) of 900,000 g/mol of the copolymer xylene soluble (XS) fraction implied the existence of a very high rubber I.V. (i.e., at least 6 dl/g). This reference does not teach the tiger marking, gels and volatiles performance of the particular propylene based compositions. The Snyder (1999) reference is specific to a slurry/solvent process and does not cover a bulk or gas phase polymerization process, as contemplated by the present invention. A great disadvantage of the slurry/solvent process is the generation of high levels of volatiles in the final composition, which is highly undesirable in compounds used for automotive parts due to creation of unpleasant odors or release of harmful vapors during the lifetime of the final molded part. In addition, a slurry/solvent process has a serious disadvantage of creating an additional waste handling issue in the process due to the solvent extraction step.

A series of patents (U.S. Patent Nos. 4,771,103, 5,461,115 and 5,854,355) disclose a continuous process for production of an ethylene block copolymer having reduced fish eyes. A key element in reducing fish eyes is the feeding of a glycol compound to the degassing stage between the homo- (first stage) and copolymerization stage. The slurry/solvent process described in these patents generates high levels of volatile organic compounds in the final product compared to bulk/gas processes, which is highly undesirable in the automotive industry, which requires materials of reduced volatiles emissions. In addition, a slurry/solvent process is not efficient from a production rate viewpoint relative to a bulk/gas phase process, similar of that of the present invention. This process has also a serious disadvantage of creating an additional waste handling issue due to the solvent extraction step. Another drawback of these references is that effectiveness of their processes in terms of reducing fish eyes in combination with excellent tiger marking performance has not been achieved, taught or proven for a bulk/gas phase polymerization process similar to that of the present invention.

Several other compounds, primarily antistatic agents, are known to reduce sheeting and fouling caused by deposition and agglomeration/adherence of fine particles on the reactor walls and/or clogging of charge and discharge pipes. These agents are preferentially found on fine particles due to the larger surface/volume ratio compared to large particles. Several references (U.S. Patent No. 5,410,002, US 2008/0161610A1, US 2005/0203259 A1) disclose the use of antistatic compositions as antifouling agents but fail to teach the combination of reduced gels (in the bulk) and excellent tiger-marking or flowability.

Mitsutani et al. in U.S. Patent No. 6,466,875 discloses a method for estimating the gel content of propylene block copolymers obtained by a continuous process which can optionally use a classifier and/or chemical additive. Both options act to reduce the number of particles with high rubber content in the second stage by returning to the first stage reactor particles having short residence time (classifier), or selectively poisoning short residence time particles from the first stage (chemical additive). However, this reference fails to teach the combination of low gel count and excellent tiger marking performance of the composition (especially at impact copolymers of high viscosity ratio) as in the present invention.

U.S. Patent Nos. 6,777,497 and 7,282,537 relate to compositions utilizing high I.V. ethylene-propylene random copolymers plus a propylene-based component (e.g., homopolymer) to influence low generation of flow marks in molded articles, little generation of granular structures (fish eyes) and enhanced balance of rigidity and toughness. One of the disadvantages of these compositions is poor low-temperature impact resistance due to the random copolymer component, which is substantially different from the ethylene-propylene rubber component of the present invention. There is a need for a propylene based composition exhibiting a combination of improved part appearance, high flowability, and excellent mechanical properties as provided by the present invention.

Grein et al. in U.S. Patent No. 7,504,455 relates to propylene based compositions which do not show flow marks and have good impact strength to stiffness ratio. While this reference discloses no flow marks of their composition, it fails to teach the performance in terms of surface appearance such as large gels due to the existence of the high I.V. rubber component (4-6.5 dl/g) that typically deteriorates the appearance of molded parts (high viscosity ratio).

U.S. Patent Nos. 6,518,363 and 6,472,477 disclose polypropylene compositions containing high I.V. propylene-ethylene random copolymer rubber portions as part of a compositional blend. These compositions are designed to produce molded articles with acceptable appearance defined by low flow marks and few fish eyes (granular structures). In the '363 patent, the composition comprises a blend of two propylene-ethylene block copolymers and an additional HPP phase. In the '477 patent, the composition comprises a blend of HPP and a propylene-ethylene block copolymer; compositions containing high I.V. rubber (e.g. I.V. > 6 dl/g) have not achieved a satisfactory degree of reduction of large gels count, negatively affecting the surface appearance. The present invention, which utilizes a single in-reactor ethylene-propylene copolymer composition presenting the advantage of process and molecular structure simplicity compared to the compositions of these references, further produces fish eye concentrations in much lower concentrations at high I.V. rubber.

U.S. 2006/0194924 claims a polyolefin masterbatch composition that can be injection-molded into large objects which exhibit improved surface properties, particularly with respect to reduction of tiger striping and gels. One limitation of these compositions is that generally the total composition MFR is rather low. These lower MFRs present the disadvantage of reduced mold fluidity. In addition, this reference defines good gel quality as an "average" diameter size of < 1500 microns. It is well known that gel sizes > 500 microns are quite undesirable due to poor aesthetics of large parts and negative effects on part paintability. The compositions in the present invention have the advantage of significantly improved surface appearance, since the average gel diameter size is well below 500 microns, in additional to improved mold flowability relative to this reference.

A number of other inventions (e.g., U.S. Pat. Nos. 6,441,081, 6,667,359 and 7,064,160) teach ICP compositions of excellent tiger marking performance, however they fail to teach or achieve the desired performance in gels count, while the structure of their claimed compositions is substantially different from that of the present invention.

SUMMARY OF THE INVENTION

It has been now surprisingly discovered that a class of ICP compositions made with a solvent free polymerization process exhibit excellent tiger marking performance in large/long molded parts combined with very low gels count despite the high viscosity ratio (e.g., > 4) between the rubber and matrix phases. This is counterintuitive and unexpected, since a high viscosity ratio (needed for stabilization of the flow front in the mold and reduction of tiger marking severity) normally leads to numerous large gels based on Weber dimensionless number principles published in the literature (e.g., "Polypropylene Handbook" by Nello Pasquini, 2nd Edition, 2005, pp. 226-227). The viscosity ratio effect on formation of large gels carries over in a filled compound using the composition as a formulation building component.

Furthermore, it has been surprisingly found that the inventive compositions are associated with a very low gels count even when using a quite coarse mesh wire screen, e.g., 60 mesh, independent of extruder screw type e.g., twin or single screw. Finally, the inventive compositions exhibit significantly reduced levels of volatiles as well as excellent stiffness-impact balance used either as standalone materials and/or in filled compounds. The significantly reduced gels count leads to excellent surface appearance and improved paintability of the molded parts (smoother surface). The present invention is defined in the appended claims.

BRIEF DESCRIPTION OF THE DRAWINGS

Embodiments of the invention will now be described by way of example with reference to the accompanying drawings.

Figure 1 illustrates the rheology response of the loss tangent (tanδ) as a function of angular frequency at 180 °C, representative of tiger marking performance, for inventive versus comparative compositions (standalone, i.e., not filled compounds) with MFR range of ~90-140 dg/min. In this and the following figures, all samples are pellets prepared with a 30 mm twin extruder using a 60 mesh wire screen. The relative difference in rheology response between inventive and comparative compositions was found to be independent of screw type and mesh size.

Figure 2 demonstrates the rheology response of tan$\delta$ as a function of angular frequency at 180 °C, representative of tiger marking performance, for inventive versus comparative compositions (standalone, i.e., not filled compounds) with MFR range of ~15-17 dg/min.

Figure 3 illustrates a viscosity flow curve for inventive versus comparative compositions with MFR range of ~15-17 dg/min corresponding to the tan$\delta$ profiles of Figure 1.

Figure 4 demonstrates onset distance of tiger marks as a function of tan$\delta$ (0.1 and 0.4 rad/s, 180 °C). Injection speed: 12.7 mm/s. The data points shown at 350 mm indicate that no tiger marking was observed. The filled compounds consist of 68.53% composition, 10% talc (Cimpact 710C, Rio Tinto), 21.32% impact modifier (Engage ENR 7467, Dow Chemical Company) and 0.15% antioxidant B225 (all percentages given by weight).

Figure 5 illustrates onset distance of tiger marks as a function of tan$\delta$ (0.1 rad/s, 180 °C) for standalone compositions. Injection speed: 12.7 mm/s. The data points shown at 350 mm indicate that no tiger marking was observed.

DETAILED DESCRIPTION OF THE INVENTION

In different applications that utilize ICPs, it is highly desirable to delay (and ideally eliminate) the onset of tiger / flow marking as far away from the gate of injection molded parts as possible. Tiger (flow) marking is defined as a viscoelastic melt flow instability that typically occurs in relatively long injection molded parts, where alternate dull and glossy regions occur beyond a certain distance from the gate (onset distance to flow marks). Tiger marking instability fundamentals have been described in the literature [e.g., Hirano et al., J. Applied Polym. Sci. Vol. 104, 192-199 (2007); Pathan et al., J. Applied Polym. Sci. Vol. 96, 423-434 (2005); Maeda et al., Nihon Reoroji Gakkaishi Vol. 35, 293-299 (2007)].

Tiger marking is highly undesirable due to unacceptable part appearance, especially for large/long injection molded parts. In addition to the delayed onset or elimination of tiger marking, it is highly desirable to reduce the count of large polymeric (rubber) particles (gels) as much as possible for best part surface appearance (aesthetics and paintability). The large gels (e.g., > 500 microns) are also particularly undesirable, since they are also detrimental to the impact resistance (e.g., falling weight impact strength). The tiger marking instability is particularly evident in filled compounds typically comprising the ICP composition, an external impact modifier (external rubber) and a filler (preferably talc), as disclosed in the paper by Hirano et al. (2007). To improve flowability in the mold and reduce mold cycle time, a high melt flow (MFR) ICP is desired as a component in the compounding formulation.

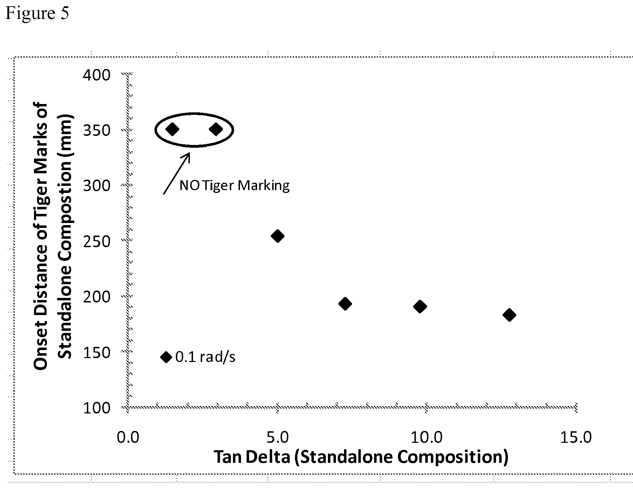

One way to improve tiger marking performance is to introduce a very high MW or equivalently high I.V. EPR component in the ICP composition that has been reported to stabilize the flow front in the mold [e.g. see Hirano et al. (2007), particularly their Figures 5-10]. In order to achieve high MFR of the overall ICP composition, the propylene based matrix needs to have a quite high MFR (e.g., > 200 dg/min for a composition MFR of about 100 dg/min). This results in a significant disparity in the viscosity between the HPP matrix and EPR, and therefore a high viscosity (approximated here by the intrinsic viscosity ratio) between the two phases. The high viscosity ratio normally results in reduced compatibility between the HPP matrix and EPR phase leading to formation of large polymeric rubber particles (gels), as described in "Polypropylene Handbook" by Nello Pasquini, 2nd Edition, 2005, pp. 226-227, based on Weber number (ratio of viscous over interfacial tension forces) principles. A viscosity ratio between the EPR and HPP phases of larger than about 4 results in significant difficulty to break-up large gels. The polymeric particles can typically have a size range up to about 1,700 microns or even higher, and particles with sizes above 500 microns, referred to herein as "large gels" or simply "gels" are particularly detrimental to the part surface appearance and as such are highly undesirable.

ICP compositions with excellent tiger marking performance (defined here as delayed onset of tiger marking or absence of tiger marks on the molded parts) and an excellent balance of mechanical properties in the filled compounds (such as elongation to break, stiffness and cold temperature impact/ductility) typically suffer from the existence of a significant count of large gels due to the presence of the high MW (I.V.) rubber phase that is not favorably compatible with the low viscosity (high MFR) propylene based matrix. In summary, the better the tiger marking performance, the worse the count of large gels in the composition due to the existence of a high MW component and the high viscosity ratio.

The purpose of the present invention is the development of an ICP composition which exhibits the novel combination of excellent tiger marking performance, significantly reduced large gels count for enhanced surface appearance, exceptional mold flowability (e.g., high MFR, low viscosity) / reduced mold cycle time and excellent stiffness-impact balance in filled compounds, while retaining simplicity in its molecular structure as well as process of making. A filled compound typically comprises the ICP composition, an external elastomer / impact modifier and a filler (e.g., talc) as defined in the paper by Hirano et al. (2007). Specifically, the content of the filled compounds in percentage weight in the examples of the invention are: 68.53% composition, 10% talc (Cimpact 710C, Rio Tinto), 21.32% impact modifier (Engage ENR 7467, Dow Chemical Company) and 0.15% antioxidant B225. In order to improve extruder processability (e.g.,

high production rates and reduced die pressures), a relatively coarse mesh wire screen (e.g., 60 mesh screen) is also highly desirable, the use of which is opposite to the direction of breaking up large gels. Excellent tiger marking performance in combination with a small count of large gels using conventional mesh wire screens in the extruder is by nature counterintuitive, based on the viscosity ratio arguments discussed above. Finally, it is highly desirable for the novel ICP compositions to exhibit a low level of Volatile Organic Compounds (VOC) that can eliminate unpleasant odors or release of harmful vapors during the life of the final molded part, a feature achieved with the composition of the present invention.

METHODS

The compositions of the present invention are prepared in a sequential polymerization process wherein a propylene based polymer (defined as the ICP "matrix") is prepared first, followed by the preparation of a copolymer rubber. The composition described herein can be prepared using a Ziegler-Natta catalyst, a co-catalyst such as triethylaluminum ("TEA"), and optionally an electron donor including the non-limiting examples of dicyclopentyldimethoxysilane ("DPCMS"), cyclohexylmethyldimethoxysilane ("CMDMS"), diisopropyldimethoxysilane ("DIPDMS"), di-t-butyldimethoxysilane, cyclohexylisopropyldimethoxysilane, n-butylmethyldimethoxysilane, tetraethoxysilane, 3,3,3-trifluoropropylmethyldimethoxysilane, mono and di-alkylaminotrialkoxysilanes or other electron donors known in the art or combinations thereof. Examples of different generation Ziegler-Natta catalysts that can be applied to the practice of the present invention are described in the "Polypropylene Handbook" by Nello Pasquini, 2nd Edition, 2005, Chapter 2 and include phthalate-based, di-ether based, succinate-based catalysts or combinations thereof. The catalyst system is introduced at the beginning of the polymerization of propylene and is transferred with the resulting propylene based polymer to the copolymerization reactor where it serves to catalyze the gas phase copolymerization of propylene and ethylene (or a higher alpha-olefin) to produce the rubber phase (also referred to here as bi-polymer).

The propylene based polymer (matrix) may be prepared using at least one reactor and may be also prepared using a plurality of parallel reactors or reactors in series (stage 1). Preferably, the propylene based polymer process utilizes one or two liquid filled loop reactors in series. The term liquid or bulk phase reactor as used herein is intended to encompass a liquid propylene process as described by Ser van Ven in "Polypropylene and Other Polyolefins", 1990, Elsevier Science Publishing Company, Inc., pp. 119-125 excluding herein a slurry/solvent process where the liquid is in an inert solvent (e.g., hexane). Despite a preference for liquid filled loop reactors, the propylene polymer may also be prepared in a gas-phase reactor, a series of gas phase reactors or a combination of liquid filled loop reactors and gas phase reactors in any sequence as described in U.S. Patent No. 7,217,772. The propylene-based polymer is preferably made in a unimodal molecular weight fashion, i.e., each reactor of stage 1 produces polymer of the same MFR / MW. Despite the preference for a unimodal propylene-based polymer, a bimodal or multi-modal propylene-based polymer may be also produced in the practice of the present invention. In all the examples of the inventive compositions (Table 1), a combination of two liquid filled loop reactors in unimodal operation were used for production of the propylene based polymer (ICP matrix).

Propylene based polymer crystallinity and isotacticity can be controlled by the ratio of co-catalyst to electron donor, and the type of co-catalyst / donor system and is also affected by the polymerization temperature. The appropriate ratio of co-catalyst to electron donor is dependent upon the catalyst / donor system selected. It is within the skill of the ordinarily skilled artisan to determine the appropriate ratio and temperature to arrive at a polymer having the desired properties.

The amount of hydrogen necessary to prepare the propylene-based (matrix) component of the invention is dependent in large measure on the donor and catalyst system used. It is within the skill of the ordinary skilled artisan to select the appropriate quantity of hydrogen for a given catalyst/donor system to prepare a propylene polymer having the combination of properties disclosed herein (including MFR) without undue experimentation. Examples of propylene-based matrix include homopolymer polypropylene and random ethylene-propylene or generally random propylene-alpha olefin copolymer, where the comonomer includes C4, C6 or C8 alpha olefins or combinations thereof. In all examples of Table 1, the propylene-based polymer consists of 100% propylene (HPP).

Once formation of the propylene-based (matrix) polymer is complete, the resultant powder is passed through a degassing stage before passing to one or more gas phase reactors (stage 2), wherein propylene is copolymerized with ethylene (C2) or an alpha-olefin comonomer including C4, C6 or C8 alpha olefins or combinations thereof, in the presence of the propylene-based polymer produced in stage 1 and the catalyst transferred therewith. Examples of gas phase reactors include a fluidized (horizontal or vertical) or stirred bed reactor or combinations thereof.

Optionally, additional external donor may be added in the gas phase copolymerization process (second stage) as described in US 2006/0217502. The external donor added in the second stage may be the same or different from the external donor added to the first stage. In the examples of this invention (Table 1), external donor was added only on the first stage (loop liquid reactors).

A suitable organic compound/agent such as antistatic inhibitor or combination of organic compounds/agents are also added in stage 2, e.g., as taught in US 2006/0217502, US 2005/0203259 and US 2008/0161510 A1 and U.S.

Patent No. 5,410,002. Examples of antistatic inhibitors or organic compounds include chemical derivatives of hydroxylethyl alkylamine available under the trade names ATMER® 163 and ARMOSTAT® 410 LM, a major antistatic agent comprising at least one polyoxyethylalkylamine in combination with one minor antistatic agent comprising at least one fatty acid sarcosinate or similar compounds or combinations thereof. An advantage of this invention is that the preferred antistatic inhibitors used in the process of making the composition, such as ATMER® 163 and ARMOSTAT® 410 LM, have FDA approval for food contact, thus expanding the range of applicability beyond automotive compounding applications. Furthermore, both ATMER 163 and ARMOSTAT 410 LM are listed in China suitable for food packaging, while ARMOSTAT 410 LM is included in European Union (EU) inventory lists as suitable for cosmetics related applications, further expanding the range of industrial applications of these additives in relation to the compositions of this invention.

For the copolymerization reaction, the gas phase composition of the reactor(s) is maintained such that the ratio of the moles of ethylene (or alpha-olefin) in the gas phase to the total moles of ethylene (or alpha-olefin) and propylene is held constant. In order to maintain the desired molar ratio and bi-polymer content, monomer feed of propylene and ethylene (or alpha-olefin) is adjusted as appropriate.

Hydrogen may be optionally added in the gas phase reactor(s) to control the MW (thus I.V.) of the copolymer rubber. In this context, MW is defined as the weight-average weight molecular weight. The composition of the gas phase is maintained such that the ratio of hydrogen to ethylene (mol/mol) referred to herein as R, is held constant. Similarly to the hydrogen control in the loops, required $H_2/C_2$ to achieve a target IV will depend on the catalyst and donor system. One skilled in the art should be able to determine the appropriate $H_2/C_2$ target. Despite the preference for a unimodal copolymer rubber (i.e., copolymer rubber of uniform I.V. and composition in co-monomer), a bimodal or multi-modal rubber copolymer (i.e., copolymer rubber with components of different I.V. or composition in co-monomer or type of co-monomer(s) or combinations thereof) is possible in the practice of the present invention.

In the case of a bimodal or multi-modal copolymer rubber composition, the "viscosity ratio" is defined as the I.V. of the highest MW rubber copolymer component over that of either (i) the I.V. of the propylene-based matrix in the case of unimodal matrix or (ii) the I.V. of the lowest MW component of the matrix in the case of a bimodal or multi-modal matrix. In the case of unimodal copolymer rubber, the "viscosity ratio" is defined as the I.V. of the acetone precipitated xylene solubles fraction (XS AP) over the I.V. of the xylene insolubles fraction of the composition (XIS). In all the examples of Table 1, C2 was used as the monomer to react with propylene in the gas phase reactor to produce a unimodal ethylene-propylene copolymer rubber.

The reactor process of the inventive compositions described above is referred to herein as "bulk/gas." Upon completion of the polymerization process, the polymer powder produced according to the above described procedure can be fed into an extruder. When an extruder is employed, typically a twin screw extruder is preferred in order to obtain the best possible melt mixing and phase dispersion. Despite the preference for a twin-screw extruder, other extruders known in the art, such as single screw extruders, may also be used to achieve the desired melt mixing.

The comparative compositions were either made with the bulk/gas reactor process using an appropriate set of reactor conditions to achieve the desired polymer attributes, or alternatively with a slurry/solvent process using hexane as a solvent as described in Snyder (1999) or in "Polypropylene," Report No. 128 by W.S. Fong, R.L. Magovern and M. Sacks, SRI International, Menlo Park, California, April 1980, referred to below as "solvent/slurry".

A 30 mm (screw diameter D) co-rotating twin screw extruder (ZSK-30, Werner & Pfleiderer (WP)/Coperion) with L/D=24 (screw diameter over screw length) and dual feeding system was used for compounding of the powder samples. The extruder contains two kneading mixing blocks and two counter-clockwise back mixing elements per screw. The extruder is coupled with a screen changer, a 1.5" diameter breaker plate and a melt pump (Xaloy Inc.). The die plate contains four holes of 0.125" diameter each. The same extruder conditions were employed for all samples for consistency and are summarized in Table 1. Both standalone compositions (i.e., compositions with barefoot additive package for extruder stabilization such as antioxidant, acid scavenger and optionally nucleator) and filled compounds were produced.

Table 1: Extruder conditions of 30 mm twin screw extruder used for all samples.

| Condition | Value (Standalone Resin) | Value (Filled Compound) |
|---|---|---|
| Temperature Zone 1 (°C) | 140 | 135 |
| Temperature Zone 2 (°C) | 170 | 165 |
| Temperature Zone 3 (°C) | 180 | 210 |
| Temperature Zone 4 (°C) | 180 | 210 |
| Temperature Zone 5 - Extruder Outlet (°C) | 180 | 210 |
| Temperature Zone 6 - Melt Pump (°C) | 180 | 210 |

(continued)

| Condition | Value (Standalone Resin) | Value (Filled Compound) |
|---|---|---|
| Temperature Zone 7 - Screen Changer (°C) | 180 | 210 |
| Temperature Zone 8 - Die (°C) | 180 | 210 |
| Screw Speed (rpm) | 250 | 150 |
| Melt Pump Suction Pressure (psi) | 100 | 250 |
| Feed Rate (lbs/hr) | 60 | 40 |
| Mesh Screen Porosity Rating | 60, 200, 75 AL3 FMF | 200 |
| *75 AL3 FMF = fiber metal felt screen (Purolator) with nominal porosity of 75 micron. ** 60 and 200 mesh refer to the porosity of standard square weave screens (Purolator). | | |

A 1.5" (38 mm screw diameter) "yellow jacket" single screw extruder (Wayne) with L/D=24 was also used for compounding of the powder (inventive and comparative compositions) samples. The screw contains a 4" long mixing zone and an 8" long external static mixer. The extruder is coupled with a screen changer having a 1.5" diameter breaker plate. The die plate contains six holes of 0.125" diameter each. The same extruder conditions were used for all samples for consistency and are summarized in Table 2. Note that the choice of extruder conditions for the single screw machine (Table 2) does not reflect equivalency in shear rates or temperature profiles with the conditions employed on the 30 mm twin screw (Table 1). Therefore, the sets of conditions on the two types of screws are independent from each other.

Table 2: Extruder conditions of 38 mm single screw extruder used for all samples. The process conditions refer to extrusion of standalone composition (i.e., not filled compound).

| Condition | Value |
|---|---|
| Temperature Zone 1 (°C) | 182 |
| Temperature Zone 2 (°C) | 182 |
| Temperature Zone 3 (°C) | 182 |
| Temperature Zone 4 (°C) | 182 |
| Temperature Die 1 (°C) | 193 |
| Temperature Die 2 (°C) | 193 |
| Temperature Die 3 (°C) | 193 |
| Screw Speed (rpm) | 150 |
| Feed Rate (lbs/hr) | ~58 |
| Mesh Screen Porosity Rating | 60, 200 |

The particle/gels size distribution was measured with a scanning digital camera system integrated with a cast film line. The model of the particle/gels tester is FSA (Film Surface Analyzer) of OCS (Optical Control Systems). The system is both high speed and high resolution with a programmable tool for visual observation of particles/gels. The conditions of the gels tester are typically the following:

Temperatures on extruder to die head range from 180-200 °C through 5 zones:

| | |
|---|---|
| Zone 1: | 180 °C |
| Zone 2: | 190 °C |
| Zones 3-5: | 200 °C |
| Screw Speed: | 35 rpm |
| Chill Roll: | 12 m/min |
| Chill Roll Temperature : | 40 °C |
| Film Thickness: | ~0.02 mm |
| Film Width: | ~4.5" (~ 11.4 cm) |

(continued)

| Film Area Scanned: | 5 m$^2$ |

In this invention, the same set of conditions for the gels tester was used for all materials. The gels tester provides the particle size distribution in the range ~1-1,700 microns as number of particles per 1 m$^2$ of cast film in intervals of 100 microns (e.g., 500-600, 600-700 microns etc.). The gels performance of the composition is defined as "excellent" when the number of gels (> 500 microns) / m$^2$ of film (0.02 mm thickness) is less than about 300 for 60 mesh or less than about 100 for 200 mesh wire screens and less than about 50 with 75 AL3 FMF (Purolator) screens for the standalone composition (i.e., composition with barefoot additive package such as antioxidant and acid scavenger for extruder stabilization), when using a twin screw extruder to prepare the pellet samples (optionally including antioxidants, nucleators, acid scavengers, rubber modifiers or polyethylene), with the process conditions as described above. The use of a coarse mesh wire screen (e.g., 60 mesh), while still achieving low gels count in either a twin or single screw is particularly advantageous from an extrusion process viewpoint (e.g. higher production rates, less frequency of change of filter media, lower die pressures etc.). A composition not fulfilling any of the above gel count requirements is considered to have a "poor" gels performance, which is unacceptable.

Dynamic frequency sweep isothermal data were generated with a controlled strain/stress rheometer (model MCR 501, Anton Paar) with 25 mm parallel plates in a nitrogen purge to eliminate sample degradation. A frequency range of 0.1-300 rad/s at five points per decade was used at 180 °C and 2 mm gap with strain amplitudes (~5-15%) lying within the linear viscoelastic region. The loss tangent (tan$\delta$) at low angular frequency (e.g. 0.1 and 0.4 rad/s) of the composition is defined here as a metric of tiger marking performance of the standalone composition and its filled compound consistent with the work of Maeda et al. (2007) [Maeda, S., K. Fukunaga, and E. Kamei, "Flow mark in the injection molding of polypropylene/rubber/talc blends," Nihon Reoroji Gakkaishi 35, 293-299 (2007)].

According to the theory, the flow in the front region becomes unstable when the shear stress exceeds the normal stress. Whether flow marks occur or not is controlled by the balance between the normal and shear stresses (related to tan$\delta$) in this region. The validity of this criterion was verified experimentally for the injection molding of polypropylene/rubber/talc blends [Maeda et al. (2007)]. It was found that the enhancement of melt elasticity at low shear rates effectively prevents the occurrence of flow marks on the molded parts [Maeda et al. (2007)].

Injection molded plaques made with a mold of 350 mm (length) x 100 mm (width) x 3 mm (thickness) were generated for both the standalone compositions and their filled compounds using a 170 Ton Van Dorn (HT Series) cold runner injection molding machine. The following injection molding conditions were used: barrel temperature: 400 °F, mold cooling temperature: 83 °F, screw speed: 100 rpm, injection speed: 25.4 mm/s, fill time: 2.1 s and cooling time: 17.1 s. The runner size was 12.7 mm, the fan gate thickness was 1.14 mm and the gate width was 82.6 mm. In all cases, a 2% by weight of a blue color masterbatch concentrate was added in the standalone composition or its filled compound to facilitate visualization of the tiger marks with the naked eye. Five plaques were made per material and condition and the reproducibility of the results was found to be excellent.

The tiger marking performance is defined as "excellent" in this invention in terms of both the standalone composition and its filled compound (defined previously) as (i) no tiger marks present or visible on the plaque or (ii) onset distance of tiger marks is beyond a critical distance away from the gate (e.g., the distance between the gate and the first tiger mark is about 75% or more of the total length of the plaque). The tiger marking performance is defined as "poor" when tiger marks are visible with an onset distance of tiger marks from the gate of less than about 75% of the total length of the plaque. It was found that for an impact copolymer polypropylene composition of MFR > 10 dg/min, a tan$\delta$ at 0.1 rad/s (180 °C) of less than about 5 (standalone composition) resulted in excellent tiger marking performance for both the standalone composition and its filled compounds due to enhanced melt elasticity. A tiger marking ranking scale of 5-10 (worst to best) was also established based on visual observation of the plaques as follows: 9-10 "excellent" and 5-8 "poor."

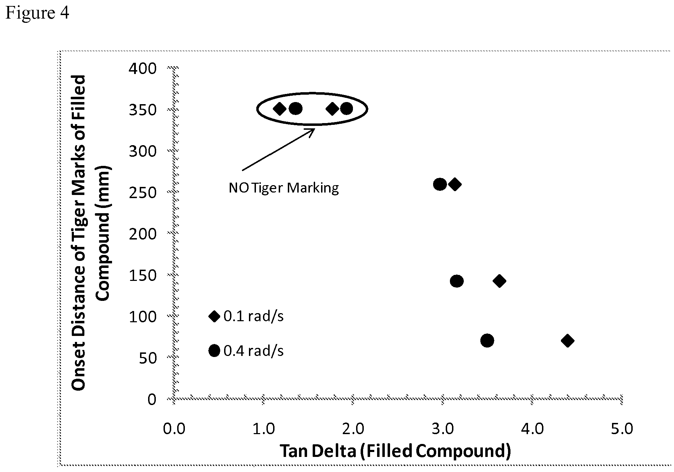

The correlation of the onset distance for tiger marking on the molded plaque with the tan$\delta$ at low frequencies was verified for both filled compounds and standalone compositions as shown in Figures 4 and 5, respectively. For filled compounds, as tan$\delta$ at low frequencies (e.g. 0.1-0.4 rad/s) decreases, the onset distance of tiger marking moves away from the gate (good). Since all materials depicted in Figure 4 consist of the composition in the same filled compound formulation [i.e., 68.53% composition, 10% talc (Cimpact 710C, Rio Tinto), 21.32% impact modifier (Engage ENR 7467, Dow Chemical Company) and 0.15% antioxidant B225] and produced with the same extruder conditions, differences in the onset distance of tiger marking of the filled compounds reflects differences in rheology (tan$\delta$ at low frequencies) of the base composition. In Figure 4, the data points corresponding to an onset distance of 350 mm indicate that no tiger marking was observed. These data points correspond to the inventive compositions I and III in the filled compounds. It is worthwhile noting that the inventive compositions I and III did not show any sign of tiger marking not only at the specified injection molding conditions (25.4 mm/s) but also within a wide range of conditions (e.g., injection speeds of 12.7-88.9 mm/s were tested with an interval of 12.7 mm/s).

In Figure 5, the correlation of the onset distance of tiger marks as a function of tan$\delta$ at 0.1 rad/s (180 °C) for the standalone composition is shown to be directionally similar to that of the filled compounds (Figure 4). The inventive compositions I and III did not show any sign of tiger marking (onset distance indicated as the length of the plaque, i.e., 350 mm for plotting purposes) at 25.4 mm/s injection speed, but also no tiger marking was observed for a wide range of injection speeds (12.7-88.9 mm/s).

The weight percentage XS fraction of the ICP composition (including contribution of both rubber copolymer and the matrix xylene solubles) was determined according to ASTM D5492 using 2 g of composition in 200 ml of xylene. The percentage XIS fraction of the composition was determined as the difference of 100 minus the percentage XS.

The acetone precipitated xylene solubles fraction (XS AP) was measured according to the following method: 300 ml of pre-filtered acetone are poured into a 1000 ml flask. 100 ml of the XS filtrate recovered according to ASTM D5492 were added into the flask that contains the acetone. The flask was shaken vigorously for two (2) minutes and subsequently the system was allowed to set for at least 15 minutes. A dried filter is pre-weighed before being placed into a clean funnel, and the precipitate from the 1000 ml flask is filtered from the acetone. Clean acetone was rinsed several times to recover as much of the polymer as possible and remove any xylene residual. The filter was then dried in an oven at 65 °C for one (1) hour under a light vacuum with a N$_2$ purge. The filter was subsequently removed to a dry desiccator for 30 minutes before re-weighing. The material deposited on the filter was the XS AP fraction (or gummy or amorphous portion of the ICP composition). The percentage XS AP (copolymer amorphous) fraction was calculated as follows:

$$\% \text{ XS AP} = \frac{2A}{S} \times 100$$

where:

A = weight of gummy (amorphous) material and filter minus the weight of the filter.

S = sample size (weight in grams of starting sample / composition which is originally added in 200 ml of xylene for execution of ASTM D5492 wet fractionation for recovery of the total XS fraction including XS contribution from both the copolymer and the matrix).

The I.V. of a specific species, e.g., the XS AP and XIS fractions of the composition, were measured in tetralin at 135°C using a Desreux-Bischoff dilution viscometer (Ubbelohde-type) on solutions with a concentration of 0.7 g/1t (concentration at 23°C).

The melt flow rate (MFR; units of g/10 min or dg/min) was measured per ASTM D1238 using a load of 2.16 kg at 230°C. One percent secant flexural modulus was measured according to ASTM D790 at 23°C. Notched Izod impact strength was measured at 23°C according to ASTM D256. Tensile properties including % strain at yield point and yield stress were determined according to ASTM D638-08. Ten (10) replicates were generated for each physical test and average values are reported.

High speed instrumented impact (IIMP) properties were measured according to ASTM D3763-08, using circular impact disks with a diameter of 4" and a thickness of 0.125" (10 replicates were measured for each test). The disks were produced via an injection molding process according to ASTM D4001. A striker mass of 22.49 kg was used. Impact height was 0.39 m and the impact velocity was 2.76 m/s. Measurements at -20 °C were performed using a Ceast impact strength machine.

EXAMPLES

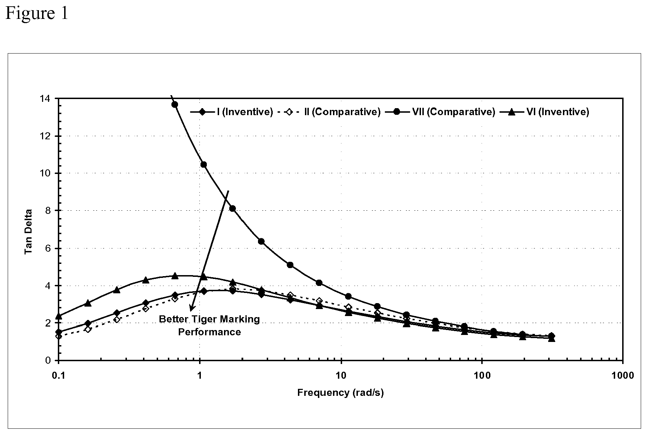

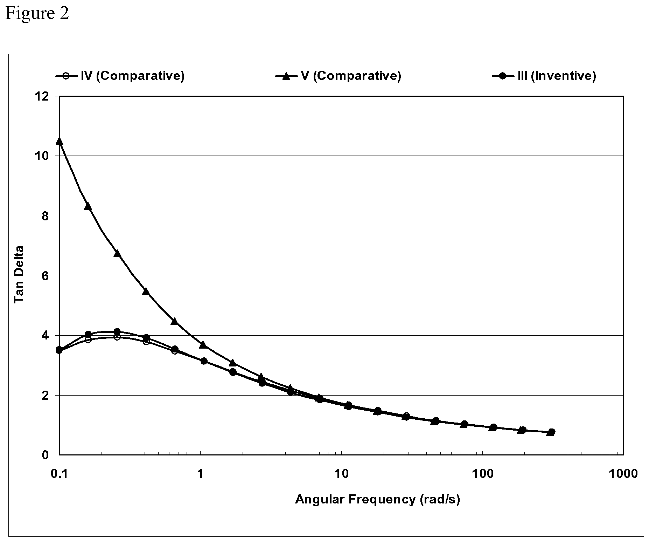

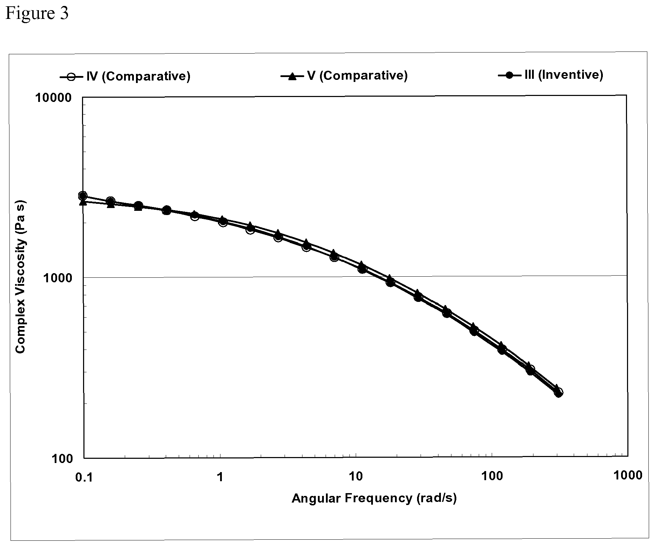

The present invention will now be described in the following examples, as summarized in the Tables and Figures, below. Examples substantiating the present invention are included in Tables 3-6 and Figures 1-3 below. Some observations of the disclosed examples include:

Table 3 shows that with an I.V. ratio between the EPR phase and the propylene-based matrix of > 4, the count of large gels is surprisingly low ("excellent" gels performance) while the tiger marking performance is simultaneously excellent (tan$\delta$ < 5 at 0.1 rad/s; 180 °C). As mentioned previously, the I.V. of the EPR phase is defined in this invention as the I.V. of the xylene solubles fraction precipitated from acetone. The I.V. of the propylene-based (matrix) phase is approximated here as the I.V. of the XIS portion of the composition which was verified experimentally. At a given composition MFR, tan$\delta$ at low frequency (0.1 rad/s, 180 °C) is a reflection of a combination of various molecular characteristics of the composition (e.g., % content of the rubber copolymer, the I.V. ratio between EPR and HPP phases, the co-monomer incorporation and composition in the rubber phase, MW of the matrix and rubber phases, MWD of the matrix and rubber phases, etc.).

In Tables 4-5, it is observed that at the same extruder conditions, type of screw and filter media, the inventive compositions have a significantly reduced count of large gels (in combination with excellent tiger marking performance) relative to comparative compositions of similar MFR and I.V. ratio that have excellent tiger marking performance (e.g., those made with the slurry/solvent process). The inventive compositions surprisingly depict a reduction of gels of size > 500 microns by at least 90% (significant reduction) relative to comparative compositions of similar MFR, I.V. ratio and tiger marking performance (similar low frequency tan$\delta$) made with the slurry/solvent process. Even with the use of advanced filter media (e.g., FMF), the inventive compositions surprisingly have significantly less count of large gels relative to comparative compositions (Table 4).

Table 6 shows that the inventive compositions have comparable or improved mechanical properties in filled compounds relative to the comparative compositions that exhibit excellent tiger marking performance and high gels count (e.g., compositions made with the slurry/solvent process).

Figures 1-3 demonstrate examples of dynamic rheology flow curves of inventive compositions relative to conventional (comparative) compositions. It is noted that at a similar viscosity flow curve, the inventive compositions have similar or improved melt elasticity relative to the conventional compositions, resulting in excellent tiger marking performance. The maximum in tan delta at low frequencies is a good indicator of elastic response (associated with the high MW species) that stabilizes the flow front in the mold, delaying the occurrence of tiger marking.

Table 3: Summary of exemplary inventive and comparative compositions

| Composition | Status | Reactor Process | MFR (dg/min) | I.V. (XS AP) / I.V. (XIS) | Tan Delta @ 0.4 rad/s, 180 °C | Tan Delta @ 0.1 rad/s, 180 °C | Tiger Marking Performance | Large Gels Count |
|---|---|---|---|---|---|---|---|---|
| I | Inventive | Bulk/Gas | 139 | 7.9 | 3.1 | 1.5 | Excellent | Excellent |
| II | Comparative | Slurry/Solvent | 116 | 7.3 | 2.8 | 1.3 | Excellent | Poor |
| III | Inventive | Bulk/Gas | 16 | 4.8 | 3.4 | 3.0 | Excellent | Excellent |
| IV | Comparative | Slurry/Solvent | 17 | 4.4 | 3.7 | 3.1 | Excellent | Poor |
| V | Comparative | Bulk/Gas | 16 | 1.9 | 5.7 | 11.0 | Poor | Excellent |
| VI | Inventive | Bulk/Gas | 97 | 5.5 | 4.2 | 2.4 | Excellent | Excellent |
| VII | Comparative | Bulk/Gas | 95 | 2.7 | 18 | 39.7 | Poor | Excellent |

where

The ratio I.V. (XS AP) / I.V. (XIS) approximates the viscosity ratio between the rubber and HPP matrix phases of the composition, and large gels are defined as particles of size greater than about 500 microns.

All data of Table 1 correspond to samples prepared with a 30 mm twin screw extruder using a 60 mesh screen. The effect of mesh size on rheological parameters was found to be negligible.

Table 4: Gels (> 500 microns) and total particles (~1-1700 microns) count (per 1 m² of cast film) of inventive and comparative compositions compounded on 30 mm twin screw extruder. All samples were compounded on the same extruder conditions (see Table 1). Tiger marking rating: 5-10 (worst to best), 9-10: "excellent", 5-8: "poor" (unacceptable).

| Composition | Status | Mesh Size | Gels (> 500 microns) / m² of film | Tiger Marking Rating |
|---|---|---|---|---|
| I | Inventive | 60 | 257 | 10 |
| VI | Inventive | 60 | 153 | 9 |
| II | Comparative | 60 | 2606 | 10 |
| VII | Comparative | 60 | 3 | 6 |
|  |  |  |  |  |
| I | Inventive | 200 | 38 | 10 |
| II | Comparative | 200 | 721 | 10 |
|  |  |  |  |  |
| I | Inventive | 75 AL3 FMF | 21 | 10 |
| II | Comparative | 75 AL3 FMF | 306 | 10 |
|  |  |  |  |  |
| III | Inventive | 60 | 101 | 10 |
| IV | Comparative | 60 | 1406 | 10 |
| V | Comparative | 60 | 2 | 5 |
|  |  |  |  |  |
| III | Inventive | 200 | 15 | 10 |
| IV | Comparative | 200 | 366 | 10 |
|  |  |  |  |  |
| III | Inventive | 75 AL3 FMF | 11 | 10 |
| IV | Comparative | 75 AL3 FMF | 96 | 10 |

Table 5: Gels (> 500 microns) and total particles (~1-1700 microns) count (per 1 m² of cast film) comparison of inventive and comparative compositions compounded on 38 mm single screw extruder. All samples were compounded on the same extruder conditions (see Table 2). Tiger marking rating: 5-10 (worst to best), 9-10: "excellent", 5-8: "poor" (unacceptable).

| Composition | Status | Mesh Size | Gels (> 500 microns) / m² of film | Tiger Marking Rating |
|---|---|---|---|---|
| I | Inventive | 60 | 313 | 10 |
| II | Comparative | 60 | 1634 | 10 |
|  |  |  |  |  |
| I | Inventive | 200 | 102 | 10 |
| II | Comparative | 200 | 326 | 10 |

(continued)

| Composition | Status | Mesh Size | Gels (> 500 microns) / m² of film | Tiger Marking Rating |
|---|---|---|---|---|
| | | | | |
| III | Inventive | 60 | 139 | 10 |
| IV | Comparative | 60 | 1141 | 10 |
| | | | | |
| III | Inventive | 200 | 26 | 10 |
| IV | Comparative | 200 | 249 | 10 |

Table 6: Summary of mechanical properties of inventive versus comparative compositions in filled compounds. The formulation in % weight is: 68.53% composition, 10% talc (Cimpact 710C, Rio Tinto), 21.32% impact modifier (Engage ENR 7467, Dow Chemical Company) and 0.15% antioxidant B225.

| Composition | Status | MFR (dg/min) -- filled compound | 1% Secant Modulus (psi) | Izod Impact @ 23 °C (ft-lb$_f$/in) | % Elongation to Break | % Yield Strain | Yield Stress (psi) | IIMP Total Energy @ - 20 °C (ft-lbs) | IIMP Energy Max Load @ - 20 °C (ft-lbs) |
|---|---|---|---|---|---|---|---|---|---|
| III | Inventive | 7.0 | 177,600 | 100% NB | 237 | 9.6 | 3,029 | 31.1 | 19.1 |
| IV | Comparative | 7.7 | 173,200 | 100% NB | 244 | 9.4 | 3,011 | 33.0 | 20.0 |
| V | Comparative | 8.6 | 175,800 | 100% NB | 221 | 9.4 | 3,048 | 31.9 | 19.2 |
| | | | | | | | | | |
| VI | Inventive | 46 | 186,900 | 2.0 | 33 | 4.9 | 2,888 | 14.3 | 14.0 |
| VII | Comparative | 43 | 172,500 | 1.9 | 27 | 4.3 | 2,606 | 11.2 | 11.1 |

In-reactor as well as extruder based heterophasic blends of a propylene based matrix with a propylene/ethylene or other propylene/alpha-olefin impact modifier (rubber) can be used. Single and twin screw extruders can be also used. Although a relatively coarse mesh wire screen (e.g., 60 mesh) is sufficient and in most cases preferable, finer mesh wire screens or more advanced screen media [e.g., fiber metal felt (FMF)] can also be utilized, as described in US 20080268244 A1.

In a preferred embodiment, the composition of the present invention comprises a combination of excellent product performance attributes including tiger marking performance, low gels count, mold flowability and mechanical properties (either in standalone composition or filled compounds) despite the existence of a high viscosity ratio between rubber and matrix phases.

The use of a coarse mesh wire screen (e.g., 60 mesh wire screen), while still achieving low gels count in either a single or twin screw has great processing advantages (e.g., higher production rates, less frequency of change of filter media, lower die pressures etc.). Low levels of volatile organic content, inherent to the inventive composition, are also highly advantageous in different applications of molded parts.

The combination of excellent tiger marking performance and low gel count, despite the high viscosity ratio between the EPR and HPP phases of the composition, in conjunction with the bulk/gas-phase process of the present invention and use of a rather coarse mesh screen (e.g., 60 mesh) is unexpected and advantageous.

The retention or improvement of mechanical properties in standalone compositions or their filled compounds relative to conventional compositions that exhibit excellent tiger performance and high gels count (e.g., due to high viscosity ratio) is counterintuitive and surprising. The low levels of volatiles in conjunction with the above unique set of product performance attributes is unexpected.

An in-reactor heterophasic blend is preferred relative to an extruder heterophasic blend due to cost savings and improved dispersion of the different phases of the composition. A twin screw extruder preferably gives the best balance of product attributes.

**Claims**

1. An impact copolymer polypropylene (ICP) composition comprising a propylene-based matrix and a propylene/ethylene or other propylene / alpha-olefin copolymer rubber phase, said composition having a value of loss tangent (tanδ) at a frequency of 0.1 rad/s at 180 °C of less than about 5.0, said composition produced by a process comprising:

   (a) in a first stage comprising at least one bulk or gas phase polymerization reactor or combinations thereof, polymerizing propylene in the presence of a Ziegler-Natta catalyst, wherein an amount of an external donor is optionally added to the first stage, to produce a target propylene-based polymer,
   (b) upon degassing, transferring the target propylene-based polymer of the first stage to a second stage comprising at least one gas phase reactor, and
   (c) polymerizing propylene and ethylene or other alpha-olefin in the presence of the target propylene-based polymer of the first stage in the second stage and the presence of a suitable organic compound/agent such as antistatic inhibitor or combinations of organic compounds/agents, to produce a propylene/ethylene or other propylene / alpha-olefin rubber copolymer, wherein an amount of an external donor is optionally added to the second stage,

   wherein said composition exhibits improved external appearance manifested by enhanced tiger (flow) marking performance in long molded parts, combined with a low gels count and enhanced mold flowability.

2. The composition of claim 1, wherein components of the composition may be obtained from renewable raw materials.

3. The composition of claim 1, wherein the ratio of tanδ at 0.4 rad/s over tanδ at 0.1 rad/s is greater than or equal to about 1.0.

4. The composition of claim 1, wherein the gels count is less than about 300 for 60 mesh screens.

5. The composition of claim 1, wherein the composition has a melt flow rate greater than about 10 and a tanδ at 0.1 rad/s (180°C) of less than about 5.0.

6. The composition of claim 1, wherein the matrix and the rubber phase are unimodal.

7. The composition of claim 1, wherein the composition has the form of a pellet, optionally including antioxidants, nucleators, acid scavengers, rubber modifiers or polyethylene, or wherein the composition has the form of a molded article.

8. A filled compound formulation including an impact copolymer polypropylene (ICP) composition comprising a propylene-based matrix and a propylene/ethylene or other propylene / alpha-olefin copolymer rubber phase, said composition having a value of loss tangent (tan$\delta$) at a frequency of 0.1 rad/s at 180 °C of less than about 5.0., said composition produced by a process comprising:

(a) in a first stage comprising at least one bulk or gas phase polymerization reactor or combinations thereof, polymerizing propylene in the presence of a Ziegler-Natta catalyst, wherein an amount of an external donor is optionally added to the first stage, to produce a target propylene-based polymer,
(b) upon degassing, transferring the target propylene-based polymer of the first stage to a second stage comprising at least one gas phase reactor, and
(c) polymerizing propylene and ethylene or other alpha-olefin in the presence of the target propylene-based polymer of the first stage in the second stage and the presence of a suitable organic compound/agent such as antistatic inhibitor or combinations of organic compounds/agents, to produce a propylene/ethylene or other propylene / alpha-olefin rubber copolymer, wherein an amount of an external donor is optionally added to the second stage,

wherein said composition exhibits improved external appearance manifested by enhanced tiger (flow) marking performance in long molded parts, combined with a low gels count and enhanced mold flowability.

9. The filled compound formulation of claim 8, wherein components of the composition may be obtained from renewable raw materials.

10. The filled compound formulation of claim 8, wherein the ratio of tan$\delta$ at 0.4 rad/s over tan$\delta$ at 0.1 rad/s is greater than or equal to about 1.0.

11. The filled compound formulation of claim 8, wherein the gels count is less than about 300 for 60 mesh screens.

12. The filled compound formulation of claim 8, wherein the composition has a melt flow rate greater than about 10 and a tan$\delta$ at 0.1 rad/s (180°C) of less than about 5.0.

13. The filled compound formulation of claim 8, wherein the matrix and the rubber phase are unimodal.

14. The filled compound formulation of claim 8, further comprising a filler and an external elastomeric impact modifier, wherein preferably, the filler is talc.

15. The filled compound formulation of claim 8, wherein the composition has the form of a pellet, optionally including antioxidants, nucleators, acid scavengers, rubber modifiers or polyethylene, or wherein the composition has the form of a molded article.

**Patentansprüche**

1. Schlagfeste Copolymerpolypropylen (ICP)-Zusammensetzung, die eine propylenbasierte Matrix und eine Propylen/Ethylen- oder andere Propylen/ alpha-Olefincopolymerkautschukphase enthält, wobei die Zusammensetzung eine Verlusttangente (tan$\delta$) bei einer Frequenz von 0,1 rad/s bei 180°C von weniger als etwa 5,0 aufweist, wobei die Zusammensetzung durch ein Verfahren hergestellt ist, welches umfasst:

(a) eine erste Stufe, die mindestens einen Massen- oder Gasphasenpolymerisationsreaktor oder Kombinationen davon enthält, wobei Propylen in Anwesenheit eines Ziegler-Natta-Katalysators polymerisiert wird, wobei eine Menge eines externen Donors gegebenenfalls in die erste Stufe zugegeben wird, wobei ein gewünschtes propylenbasiertes Polymer erhalten wird,
(b) beim Entgasen wird das gewünschte propylenbasierte Polymer der ersten Stufe in eine zweite Stufe überführt, die mindestens einen Gasphasenreaktor umfasst, und
(c) das Polymerisieren von Propylen und Ethylen oder eines anderen alpha-Olefins in Anwesenheit des gewünschten propylenbasierten Polymers der ersten Stufe in der zweiten Stufe und in Anwesenheit einer geeigneten organischen Verbindung/Mittels, beispielsweise eines Antistatikums, oder von Kombinationen von organischen Verbindungen /Mitteln, unter Bildung eines Propylen/Ethylen oder anderen Propylen/alpha-Olefinkautschukcopolymers, wobei eine Menge eines externen Donors gegebenenfalls in die zweite Stufe gegeben wird,

wobei die Zusammensetzung ein verbessertes äußeres Aussehen aufweist, das sich durch verbesserte Streifen-(Fließ) Markierungseigenschaften in langen Formteilen zusammen mit einer geringen Anzahl von Gelen und einer verbesserten Fließfähigkeit manifestiert.

2. Zusammensetzung nach Anspruch 1, wobei die Bestandteile der Zusammensetzung aus erneuerbaren Ausgangsmaterialen erhalten werden können.

3. Zusammensetzung nach Anspruch 1, wobei das Verhältnis von $\tan\delta$ bei 0,4 rad/s über $\tan\delta$ bei 0,1 rad/s größer oder gleich etwa 1,0 ist.

4. Zusammensetzung nach Anspruch 1, wobei die Gelzahl weniger als 300 bei einem 60-Maschensieb ist.

5. Zusammensetzung nach Anspruch 1, wobei die Zusammensetzung eine Schmelzflußrate aufweist, die größer als etwa 10 ist, und wobei $\tan\delta$ bei 0,1 rad/s (180°C) weniger als etwa 5,0 ist.

6. Zusammensetzung nach Anspruch 1, wobei die Matrix und die Kautschukphase unimodal sind.

7. Zusammensetzung nach Anspruch 1, wobei die Zusammensetzung die Form eines Pellets aufweist und gegebenenfalls Antioxidantien, Keimbildner, Säurefänger, Kautschukmodifikatoren oder Polyethylen enthält, oder wobei die Zusammensetzung die Form eines Formgegenstandes aufweist.

8. Gefüllte Formulierung, die eine schlagfeste Copolymerpolypropylen (ICP)-Zusammensetzung enthält, welche eine propylenbasierte Matrix und eine Propylen/Ethylen- oder andere Propylen/alpha-Olefincopolymerkautschukphase enthält, wobei die Zusammensetzung einen Wert der Verlusttangente ($\tan\delta$) bei einer Frequenz von 0,1 rad/s bei 180°C von weniger als 5,0 aufweist, wobei die Zusammensetzung durch ein Verfahren hergestellt wird, welches umfasst:

(a) eine erste Stufe, die mindestens einen Massen- oder Gasphasenpolymerisationsreaktor oder Kombinationen davon enthält, wobei Propylen in Anwesenheit eines Ziegler-Natta-Katalysators polymerisiert wird, wobei eine Menge eines externen Donors gegebenenfalls in die erste Stufe zugegeben wird, wobei ein gewünschtes propylenbasiertes Polymer erhalten wird,
(b) beim Entgasen wird das gewünschte propylenbasierte Polymer der ersten Stufe in eine zweite Stufe überführt, die mindestens einen Gasphasenreaktor umfasst, und
(c) das Polymerisieren von Propylen und Ethylen oder eines anderen Alpha-Olefins in Anwesenheit des gewünschten propylenbasierten Polymers der ersten Stufe in der zweiten Stufe und in Anwesenheit einer geeigneten organischen Verbindung/Mittels, beispielsweise eines Antistatikums, oder von Kombinationen von organischen Verbindungen /Mitteln, unter Bildung eines Propylen/Ethylen oder anderen Propylen/alpha-Olefinkautschukcopolymers, wobei eine Menge eines externen Donors gegebenenfalls in die zweite Stufe gegeben wird,

wobei die Zusammensetzung ein verbessertes äußeres Aussehen aufweist, das sich durch verbesserte Streifen-(Fließ) Markierungseigenschaften in langen Formteilen zusammen mit einer geringen Anzahl von Gelen und einer verbesserten Fließfähigkeit manifestiert.

9. Gefüllte Formulierung nach Anspruch 8, wobei die Komponenten der Zusammensetzung aus erneuerbaren Ausgangsmaterialien erhalten werden können.

10. Gefüllte Formulierung nach Anspruch 8, wobei das Verhältnis von $\tan\delta$ bei 0,4 rad/s über $\tan\delta$ bei 0,1 rad/s größer als oder gleich etwa 1,0 ist.

11. Gefüllte Formulierung nach Anspruch 8, wobei die Gelanzahl weniger als etwa 300 bei einem 60-Maschensieb ist.

12. Gefüllte Formulierung nach Anspruch 8, wobei die Zusammensetzung eine Schmelzflußrate aufweist, die größer als etwa 10 ist, und wobei $\tan\delta$ bei 0,1 rad/s (180°C) weniger als etwa 5,0 ist.

**13.** Gefüllte Formulierung nach Anspruch 8, wobei die Matrix und die Kautschukphase unimodal sind.

**14.** Gefüllte Formulierung nach Anspruch 8, die außerdem ein Füllmittel und ein externes elastomeres Schlagfestigkeitsmodifikationsmittel enthält, wobei der Füllstoff vorzugsweise Talg ist.

**15.** Gefüllte Formulierung nach Anspruch 8, wobei die Zusammensetzung die Form eines Pellets aufweist und gegebenenfalls Antioxidantien, Keimbildner, Säurefänger, Kautschukmodifikationsmittel oder Polyethylen enthält, oder worin die Zusammensetzung die Form eines Formgegenstandes aufweist.

**Revendications**

**1.** Composition de copolymère de polypropylène choc (ICP) comprenant une matrice à base de propylène et une phase de caoutchouc de copolymère de propylène/éthylène ou d'un autre copolymère de propylène/alpha-oléfine, ladite composition ayant une valeur de tangente de perte (tan$\delta$) à une fréquence de 0,1 rad/s à 180 °C inférieure à environ 5,0, ladite composition produite par un procédé comprenant :

(a) dans un premier étage comprenant au moins un réacteur de polymérisation en masse ou en phase gazeuse ou des combinaisons de ceux-ci, la polymérisation de propylène en présence d'un catalyseur de type Ziegler-Natta, dans laquelle une quantité d'un donneur externe est facultativement ajoutée au premier étage, pour produire un polymère cible à base de propylène,
(b) lors du dégazage, le transfert du polymère cible à base de propylène du premier étage à un second étage comprenant au moins un réacteur en phase gazeuse, et
(c) la polymérisation de propylène et d'éthylène ou d'une autre alpha-oléfine en présence du polymère cible à base de propylène du premier étage dans le second étage et la présence d'un composé organique/agent adéquat tel qu'un inhibiteur antistatique ou de combinaisons de composés organiques/agents, pour produire un caoutchouc de copolymère de propylène/éthylène ou d'un autre copolymère de propylène/alpha-oléfine, dans laquelle une quantité d'un donneur externe est facultativement ajoutée au second étage, dans laquelle ladite composition présente un aspect externe amélioré se manifestant par une performance améliorée des marques de zébrures (d'écoulement) dans les pièces moulées longues, combinée à un faible nombre de gels et à une aptitude à l'écoulement améliorée dans un moule.

**2.** Composition selon la revendication 1, dans laquelle les composants de la composition peuvent être obtenus à partir de matières premières renouvelables.

**3.** Composition selon la revendication 1, dans laquelle le rapport de tan$\delta$ à 0,4 rad/s par rapport à tan$\delta$ à 0,1 rad/s est supérieur ou égal à environ 1,0.

**4.** Composition selon la revendication 1, dans laquelle le nombre de gels est inférieur à environ 300 pour des cribles de 60 mesh.

**5.** Composition selon la revendication 1, dans laquelle la composition a une fluidité à l'état fondu supérieure à environ 10 et une tan$\delta$ à 0,1 rad/s (180 °C) inférieure à environ 5,0.

**6.** Composition selon la revendication 1, dans laquelle la matrice et la phase de caoutchouc sont unimodales.

**7.** Composition selon la revendication 1, dans laquelle la composition a la forme d'un granulé, incluant facultativement des antioxydants, des agents de nucléation, des fixateurs d'acide, des modificateurs de caoutchouc ou du polyéthylène, ou dans laquelle la composition a la forme d'un article moulé.

**8.** Formulation d'un composé chargé incluant une composition de copolymère de polypropylène choc (ICP) comprenant une matrice à base de propylène et une phase de caoutchouc de copolymère de propylène/éthylène ou d'un autre copolymère de propylène/alpha-oléfine, ladite composition ayant une valeur de tangente de perte (tan$\delta$) à une fréquence de 0,1 rad/s à 180 °C inférieure à environ 5,0, ladite composition produite par un procédé comprenant :

(a) dans un premier étage comprenant au moins un réacteur de polymérisation en masse ou en phase gazeuse ou des combinaisons de ceux-ci, la polymérisation de propylène en présence d'un catalyseur de type Ziegler-Natta, dans laquelle une quantité d'un donneur externe est facultativement ajoutée au premier étage, pour produire un polymère cible à base de propylène,

(b) lors du dégazage, le transfert du polymère cible à base de propylène du premier étage à un second étage comprenant au moins un réacteur en phase gazeuse, et

(c) la polymérisation de propylène et d'éthylène ou d'une autre alpha-oléfine en présence du polymère cible à base de propylène du premier étage dans le second étage et la présence d'un composé organique/agent adéquat tel qu'un inhibiteur antistatique ou de combinaisons de composés organiques/agents, pour produire un caoutchouc de copolymère de propylène/éthylène ou d'un autre copolymère de propylène/alpha-oléfine, dans laquelle une quantité d'un donneur externe est facultativement ajoutée au second étage, dans laquelle ladite composition présente un aspect externe amélioré se manifestant par une performance améliorée des marques de zébrures (d'écoulement) dans les pièces moulées longues, combinée à un faible nombre de gels et à une aptitude à l'écoulement améliorée dans un moule.

9. Formulation d'un composé chargé selon la revendication 8, dans laquelle les composants de la composition peuvent être obtenus à partir de matières premières renouvelables.

10. Formulation d'un composé chargé selon la revendication 8, dans laquelle le rapport de $\tan\delta$ à 0,4 rad/s par rapport à $\tan\delta$ à 0,1 rad/s est supérieur ou égal à environ 1,0.

11. Formulation d'un composé chargé selon la revendication 8, dans laquelle le nombre de gels est inférieur à environ 300 pour des cribles de 60 mesh.

12. Formulation d'un composé chargé selon la revendication 8, dans laquelle la composition a une fluidité à l'état fondu supérieure à environ 10 et une $\tan\delta$ à 0,1 rad/s (180°C) inférieure à environ 5,0.

13. Formulation d'un composé chargé selon la revendication 8, dans laquelle la matrice et la phase de caoutchouc sont unimodales.

14. Formulation d'un composé chargé selon la revendication 8, comprenant en outre une charge et un modificateur de la résistance aux chocs élastomère externe, dans laquelle de préférence, la charge est du talc.

15. Formulation d'un composé chargé selon la revendication 8, dans laquelle la composition a la forme d'un granulé, incluant facultativement des antioxydants, des agents de nucléation, des fixateurs d'acide, des modificateurs de caoutchouc ou du polyéthylène, ou dans laquelle la composition a la forme d'un article moulé.

Figure 1

Figure 2

Figure 3

Figure 4

Figure 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4771103 A
- US 5461115 A
- US 5854355 A
- US 5410002 A
- US 20080161610 A1
- US 20050203259 A1
- US 6466875 B, Mitsutani
- US 6777497 B
- US 7282537 B
- US 7504455 B, Grein
- US 6518363 B
- US 6472477 B
- US 20060194924 A
- US 6441081 B
- US 6667359 B
- US 7064160 B
- US 7217772 B
- US 20060217502 A
- US 20050203259 A
- US 20080161510 A1
- US 20080268244 A1

### Non-patent literature cited in the description

- **SNYDER, A.** A Unique High Stiffness, High Melt Flow Impact PP Copolymer From a Solvent/Slurry Process. *9th International Business Forum on Specialty Polyolefins, Scotland (SPO 99) Conference,* 12 October 1999
- **NELLO PASQUINI.** Polypropylene Handbook. 2005, 226-227
- **HIRANO et al.** *J. Applied Polym. Sci.,* 2007, vol. 104, 192-199
- **PATHAN et al.** *J. Applied Polym. Sci.,* 2005, vol. 96, 423-434
- **MAEDA et al.** *Nihon Reoroji Gakkaishi,* 2007, vol. 35, 293-299
- **NELLO PASQUINI.** Polypropylene Handbook. 2005
- **SER VAN VEN.** Polypropylene and Other Polyolefins. Elsevier Science Publishing Company, Inc, 1990, 119-125
- *Snyder,* 1999
- **W.S. FONG ; R.L. MAGOVERN ; M. SACKS.** Polypropylene. SRI International, April 1980
- **MAEDA, S. ; K. FUKUNAGA ; E. KAMEI.** Flow mark in the injection molding of polypropylene/rubber/talc blends. *Nihon Reoroji Gakkaishi,* 2007, vol. 35, 293-299